# EUROPÄISCHE PATENTSCHRIFT

(11) **EP 0 677 120 B1**
(45) Veröffentlichungstag und Bekanntmachung des Hinweises auf die Patenterteilung: **16.06.1999**
(21) Anmeldenummer: 94927440.1
(22) Anmeldetag: 28.09.1994
(51) Int. Cl.: D01F 6/12, D01F 6/48, D01F 1/10, C08J 5/18, C08K 3/00, C08K 3/26, C08L 27/18, A61C 15/04

(54) **MONOAXIAL VERSTRECKTER FORMKÖRPER AUS POLYTETRAFLUORETHYLEN**
MONOAXIALLY DRAWN POLYTETRAFLUOROETHYLENE MOULDING
PIECE MOULEE ETIREE MONOAXIALEMENT EN POLYTETRAFLUORETHYLENE

(30) Priorität: 03.11.1993 AT 222193
(43) Veröffentlichungstag der Anmeldung: 18.10.1995
(73) Patentinhaber: LENZING AKTIENGESELLSCHAFT, 4860 Lenzing (AT)
(72) Erfinder: MARINI, Ingo, A-4860 Lenzing (AT); WIMMER, Adalbert, A-4840 Vöcklabruck (AT); BACHMAIR, Josef, A-4863 Seewalchen (AT)
(74) Vertreter: Schwarz, Albin, Dr. Kopecky & Schwarz Patentanwälte
(86) Internationale Anmeldenummer: AT9400139
(87) Internationale Veröffentlichungsnummer: WO9512698

(56) Entgegenhaltungen:
- EP-A- 0 335 466
- EP-A- 0 391 887
- WO-A-90/10673
- US-A- 3 556 161
- US-A- 4 096 227
- US-A- 5 220 932

## Beschreibung

Die Erfindung betrifft einen monoaxial verstreckten Formkörper aus Polytetrafluorethylen (PTFE), der als Folie, Bändchen, Garn oder Faser ausgebildet sein kann, sowie ein Verfahren zu dessen Herstellung.

PTFE ist aufgrund seiner thermischen Stabilität und seiner chemischen Inertheit ein geschätzter Werkstoff. Aus der AT-B-370.674 sind monoaxial verstreckte Folien aus gesintertem PTFE bekannt, deren Festigkeit in Verstreckungsrichtung Werte zwischen 50 N/mm² und 140 N/mm² aufweist. Diese Folien werden hergestellt, indem PTFE-Pulver zunächst zu einem zylindrischen Formkörper verpreßt wird. Anschließend wird der Formkörper gesintert, worauf Folien abgeschält, auf Temperaturen von mindestens 327°C erhitzt und verstreckt werden.

Die GB-A - 2 025 835 beschreibt die Herstellung poröser PTFE-Formkörper nach dem Pastenextrusionsverfahren, wobei eine pastenförmige Masse, welche im wesentlichen PTFE-Pulver und ein Gleitmittel (Kohlenwasserstoff) enthält, durch Düsen gepreßt wird, worauf das Gleitmittel durch Trocknen entfernt wird. Danach wird der Formkörper über den Kristallitschmelzpunkt des PTFE (327°C) erhitzt und während des Erhitzens verstreckt.

Die AT-B-391.473 und die EP-A-391887 beschreiben ein Verfahren zur Herstellung eines monoaxial verstreckten Formkörpers aus PTFE, bei welchem eine pastenförmige PTFE-Masse kontinuierlich zu einem Formling verarbeitet wird, welcher über eine Mehrzahl von Rollen bzw. Walzen geführt, erhitzt und verstreckt wird, wobei vor Aufbringen des Streckzuges der Formling auf eine Temperatur zwischen 327 und 450°C erhitzt und dabei gesintert wird. Dieses Verfahren gestattet die Herstellung eines monoaxial verstreckten Formkörpers aus PTFE mit Festigkeitswerten in Verstreckungsrichtung von mindestens 22 cN/tex (500 N/mm²).

Es ist bekannt, daß PTFE-Multifilamentgarne, die nach dem Matrix-Spinnverfahren der US-A - 2,893,105 und der US-A-2,933,154 und solche nach dem Spalt-Schäl-Verfahren der AT-B-340.561 hergestellt wurden, zur Herstellung von Flechtschnüren für Stopfbüchsenpackungen verwendet werden können. Weiters ist in der AT-B - 347.003 beschrieben, wie derartige Garne zur Verbesserung der Gleiteigenschaften mit PTFE und Graphit beschichtet werden.

Es ist außerdem bekannt, daß mit Hilfe der Pastenextrusion hergestellte, orientierte, aber nicht gesinterte Folienbändchen mit PTFE-Dispersion imprägniert und mit Silikon- oder Paraffinölen geölt zur Herstellung von Stopfbüchsenpackungen verwendet werden. Derartige Folienbändchen sind auch mit Graphitfüllung im Handel.

Alle diese mit Graphit gefüllten Produkte haben den Nachteil, daß die Graphitfüllung, die zur Erhöhung der Gleiteigenschaften vorgesehen ist, von schwarzer Farbe sind, wodurch diese Produkte in gewissen Bereichen der Industrie nicht eingesetzt werden können. Dazu kommt noch, daß diese Produkte eine hohe Fließneigung zeigen (Kaltfluß), was naturgemäß den Verschleiß fördert. Nachteilig ist weiters, daß die mit Graphit gefüllten monoaxialen Formkörper nur Festigkeiten von weniger als 10 cN/tex aufweisen.

Die vorliegende Erfindung möchte diese Nachteile beseitigen, den Einsatzbereich des Werkstoffes PTFE erweitern und einen monoaxial verstreckten Formkörper aus PTFE zur Verfügung stellen, welcher von heller Farbe ist und eine höhere Festigkeit und geringere Kaltflußneigung besitzt, als ein mit Graphit gefüllter PTFE-Formkörper. Weiters soll der PTFE-Formkörper mit verschiedenen Gleiteigenschaften hergestellt werden können.

Der erfindungsgemäße, monoaxial verstreckte Formkörper aus Polytetrafluorethylen ist dadurch gekennzeichnet, daß er als Füllmittel Talk und/oder Glimmer und/oder Schlämmkreide enthält und eine Festigkeit von mindestens 10 cN/tex, vorzugsweise über 16 cN/tex, aufweist, wobei das Füllmittel zu maximal 40 Massen% im Formkörper vorgesehen ist.

Es ist überraschend gelungen, im Wege der Pastenextrusion PTFE-Pulver mit den genannten Füllmitteln zu vermischen und z.B. zu Folien zu verarbeiten, diese zu sintern und anschließend zu verstrecken, wobei trotz der Anwesenheit des Füllmittels sehr hohe Festigkeiten erhalten werden. Liegen die Festigkeiten z.B. eines ungefüllten PTFE-Garnes (hergestellt nach AT-B-370.674) bei 5 bis 15 cN/tex, so hat ein erfindungsgemäß hergestelltes und gefülltes Garn Festigkeiten bis zu 25 cN/tex. Mit der Reißfestigkeit sinkt gleichzeitig die Reißdehnung und erhöht sich die Kriechfestigkeit, die bei der Verwendung der Garne als Dichtungen für Stopfbüchsen eine wichtige Größe darstellt.

Der erfindungsgemäße Formkörper kann das Füllmittel bis zu 40 Massen% enthalten, ohne daß die angegebene Mindestfestigkeit von 10 cN/tex unterschritten wird.

Eine bevorzugte Ausführungsform des erfindungsgemäßen Formkörpers ist dadurch gekennzeichnet, daß als Füllmittel Talk und/oder Glimmer zwischen 20 und 30 Massen% vorgesehen ist. Ein derartiger Formkörper besitzt gute Gleiteigenschaften. Messungen, die in Anlehnung nach DIN 53 375 vorgenommen wurden, erbrachten bei Garnen aus reinem PTFE Reibwerte (µₚ) von ca. 150 (110-200), bei graphitgefüllten Garnen lagen die Werte zwischen 50 und 100 und bei erfindungsgemäßen, mit Talk gefüllten Garnen zwischen 30 und 70.

Besitzt der erfindungsgemäße Formkörper vorteilhaft weiters eine Dehnung von maximal 30%, so eignet er sich z.B. ausgezeichnet in Pumpen als Material zum Abdichten der Welle (im Stopfbuchsengehäuse). Bis heute werden in hohem Maße PTFE-Formkörper mit Graphitfüllung für diesen Zweck verwendet. Wie oben bereits erwähnt, weisen diese bekannten Formkörper eine unzureichende Kriechfestigkeit und einen hohen Verschleiß auf, wodurch Abrieb, der im Falle einer Graphitfüllung von schwarzer Farbe ist, aus dem Stopfbuchsengehäuse austritt und z.B. eine helle Flüssigkeit, gegen die abgedichtet werden soll, unerwünschterweise verfärben und verunreinigen kann. Alle diese Nachteile weist diese Ausführungsform des erfindungsgemäßen Formkörpers nicht auf.

Wird der erfindungsgemäße Formkörper als Garn ausgebildet, so kann er vorteilhaft zur Herstellung von Flechtdichtungen verwendet werden.

Eine weitere bevorzugte Ausführungsform des erfindungsgemäßen Formkörpers ist dadurch gekennzeichnet, daß als Füllstoff Schlämmkreide mit mindestens 5 Massen% vorgesehen ist. Es hat sich gezeigt, daß Schlämmkreide die Gleitreibung µₚ auf mindestens 200 erhöht, sodaß sich ein derartiges Material für alle jene Verwendungszwecke gut eignet, bei denen es auf hohe Gleitreibung ankommt.

Eine bevorzugte Ausführungsform des erfindungsgemäßen Formkörpers ist dadurch gekennzeichnet, daß als Füllmittel ausschließlich Schlämmkreide vorgesehen ist und daß er als Zahnseide ausgebildet ist. Es hat sich gezeigt, daß die erfindungsgemäße Zahnseide bei Verwendung das Zahnfleisch mehr schont, als dies bei den Zahnseiden des Standes Technik der Fall ist. Über den Gehalt an Schlämmkreide kann die Gleitreibung der Zahnseide beeinflußt werden. Untersuchungen haben ergeben, daß sich Zahnseiden mit Schlämmkreidegehalten zwischen 0,1 und 15 Massen% besonders gut eignen.

Die Erfindung betrifft weiters ein Verfahren zur Herstellung des erfindungsgemäßen Formkörpers, welches Verfahren dadurch gekennzeichnet ist, daß
a) pulverförmiges Polytetrafluorethylen mit Talk und/oder Glimmer und/oder Schlämmkreide und einem Kohlenwasserstoff vermischt wird,
b) das erhaltene Gemisch zu einem Vor-Formkörper geformt und vom Kohlenwasserstoff befreit wird,
c) der vom Kohlenwasserstoff befreite Vor-Formkörper gesintert und anschließend im gesinterten Zustand verstreckt wird, wobei das Füllmittel in einer solchen Menge eingeseht wird, daß im Formkörper 40 Massen% nicht überschritten werden, und wobei die monoaxiale Verstreckung derart durch geführt wird, daß die Festigkeit des Formkörpers in Verstreckungsrichtung mindestens 10 cN/tex beträgt.

Der Vor-Formkörper wird zur Sinterung am besten auf eine Temperatur von mindestens 327°C, vorzugsweise zwischen 380 und 400°C, erhitzt.

Um die genannten Festigkeiten im erfindungsgemäßen Formkörper zu erreichen, wird der gesinterte Vor-Formkörper am besten im Verhältnis zwischen 1 : 5 und 1 : 20, vorzugsweise zwischen 1 : 5 und 1 : 15 verstreckt.

Eine besonders zweckmäßige Variante des erfindungsgemäßen Verfahrens besteht darin, daß der Vor-Formkörper eine Folie ist, die nach Sinterung und Verstreckung zu Bändchen geschnitten wird und diese Bändchen zweckmäßigerweise mittels einer Nadelwalze noch fibrilliert werden.

Bevorzugte Ausführungsformen der vorliegenden Erfindung werden anhand der folgenden Beispiele noch näher beschrieben. Die Herstellung des erfindungsgemäßen Formkörpers wird dabei auf der in der AT-B - 391.473 beschriebenen Sinter- und Streckanlage vorgenommen.

### Beispiel 1

100 Gewichtsteile des im Handel erhältlichen PTFE-Pulvers Hostaflon® TF 2029 der Firma Höchst AG werden mit 25 Teilen Talk (Naintsch A-30) und 30 Teilen eines für die Pastenextrusion üblichen Gleitmittels (Kohlenwasserstoff mit einem Siedebereich von 186-214°C) gemischt und zu zylindrischen Formkörpern verpreßt. Diese zylindrischen Formkörper werden anschließend zu einem Strang verpreßt, weiter zu einer Folie ausgewalzt und durch Trocknen vom Gleitmittel befreit. Die getrocknete Folie wird weiter bei einer Temperatur von 385°C gesintert und anschließend im Verhältnis 1:7 verstreckt. Es wird eine überraschend weiche Folie (30-38 Shore D) mit guten Gleiteigenschaften und einer Festigkeit von 21,3 cN/tex bei 6,5% Dehnung erhalten.

### Beispiel 2

70 Teile PTFE-Pulver der Type Hostaflon® TF 2029 werden mit 30 Teilen Talk A-30 und 30 Teilen Gleitmittel gemischt und auf die gleiche Weise wie in Beispiel 1 beschrieben zur Folie ausgewalzt, getrocknet, gesintert und verstreckt. Die Festigkeit beträgt 19,5 cN/tex bei 5,5% Dehnung.

### Beispiel 3

Eine wie in Beispiel 1 beschriebene Mischung wird auf die gleiche Weise zu einer Folie verarbeitet, diese aber bei 395°C gesintert und danach im Verhältnis 1:8,5 verstreckt. Die Festigkeit beträgt 24,5 cN/tex bei 5% Dehnung. Danach wird die Folie fibrilliert und mit 22% Paraffinöl getränkt.

Das Endprodukt ist ein quasi Multifilamentgarn, das direkt zu Flechtschnüren verarbeitet werden kann. Das Paraffinöl dient dabei als Einlaufschmiermittel.

### Beispiel 4

100 Teile PTFE-Pulver der Type Algoflon® DF 200 (Hersteller: Ausimont S.p.A.) werden mit 47 Teilen Talk A-60 und 30 Teilen Gleitmittel gemischt und zur Folie verarbeitet. Diese Folie wird bei 390°C gesintert und im Verhältnis 1:6 verstreckt. Die Festigkeit der erhaltenen Folie beträgt 16 cN/tex bei einer Dehnung von 8%.

### Beispiel 5

Eine wie in Beispiel 4 beschriebene Mischung wird in der gleichen Art zu einer Folie verarbeitet, diese jedoch bei 395°C gesintert und im Verhältnis 1:7 verstreckt. Die Festigkeit beträgt 17,5 cN/tex bei 5% Dehnung. Weiters wird die Folie nach der Verstreckung fibrilliert und mit 20% Paraffinöl getränkt.

### Beispiel 6

75 Teile PTFE-Pulver der Type Hostaflon® TF 2029 werden mit 25 Teilen Glimmer und 27 Teilen Gleitmittel gemischt und in der gleichen Art wie in Beispiel 1 beschrieben zu einer Folie verarbeitet und verstreckt. Die Festigkeit beträg 16,5 cN/tex bei 8,5% Dehnung.

### Beispiel 7

100 Teile PTFE-Pulver der Type Algoflon® DF 200 werden mit 10 Teilen Schlämmkreide und 25 Teilen Gleitmittel gemischt und zu einer Folie verarbeitet. Diese Folie wird bei 390°C gesintert und im Verhältnis 1:13,5 verstreckt und zu Bändchen geschnitten. Diese Festigkeit der erhaltenen Bändchen beträgt 26 cN/tex bei einer Dehnung von 4,5%. Bei diesem Produkt wird durch die Inkorporierung von Schlämmkreide die Gleitreibung vergrößert. Das Produkt kann als Zahnseide verwendet werden.

## Patentansprüche

1. Monoaxial verstreckter Formkörper aus Polytetrafluorethylen mit Talk und/oder Glimmer und/oder Schlämmkreide als Füllmittel und einer Festigkeit in Verstreckungsrichtung von mindestens 10 cN/tex, wobei das Füllmittel zu maximal 40 Massen% im Formkörper vorgesehen ist.

2. Formkörper nach Anspruch 1, dadurch gekennzeichnet, daß als Füllmittel Talk und/oder Glimmer zwischen 20 und 30 Massen% vorgesehen ist (sind).

3. Formkörper nach Anspruch 1, dadurch gekennzeichnet, daß als Füllmittel Schlämmkreide mit mindestens 5 Massen% vorgesehen ist.

4. Formkörper nach einem der Ansprüche 1 bis 3, dadurch gekennzeichnet, daß er eine Dehnung von maximal 30% aufweist.

5. Formkörper nach Anspruch 1, dadurch gekennzeichnet, daß als Füllmittel ausschließlich Schlämmkreide vorgesehen ist und daß er als Zahnseide ausgebildet ist.

6. Formkörper nach Anspruch 5, dadurch gekennzeichnet, daß die Schlämmkreide zwischen 0,1 und 15 Massen% vorgesehen ist.

7. Verfahren zur Herstellung eines Formkörpers nach einem der Ansprüche 1 bis 6, gekennzeichnet durch die Kombination der Maßnahmen, daß
a) pulverförmiges Polytetrafluorethylen mit Talk und/oder Glimmer und/oder Schlämmkreide als Füllmittel und einem Kohlenwasserstoff vermischt wird,
b) das erhaltene Gemisch zu einem Vor-Formkörper geformt und vom Kohlenwasserstoff befreit wird,
c) der vom Kohlenwasserstoff befreite Vor-Formkörper gesintert und anschließend im gesinterten Zustand monoaxial verstreckt wird, wobei das Füllmittel in einer solchen Menge eingesetzt wird, daß im Formkörper 40 Massen% nicht überschritten werden, und wobei die monoaxiale Verstreckung derart durchgeführt wird, daß die Festigkeit des Formkörpers in Verstreckungsrichtung mindestens 10 cN/tex beträgt.

8. Verfahren nach Anspruch 7, dadurch gekennzeichnet, daß der Vor-Formkörper zur Sinterung auf eine Temperatur von mindestens 327°C, vorzugsweise zwischen 380 und 400°C, erhitzt wird.

9. Verfahren nach einem der Ansprüche 7 oder 8, dadurch gekennzeichnet, daß der gesinterte Vor-Formkörper im Verhältnis zwischen 1 : 5 und 1 : 20, vorzugsweise zwischen 1 : 5 und 1 : 15, verstreckt wird.

10. Verfahren nach einem der Ansprüche 7 bis 9, dadurch gekennzeichnet, daß der Vor-Formkörper eine Folie ist, die nach Sinterung und Verstreckung zu Bändchen geschnitten wird.

11. Verfahren nach Anspruch 10, dadurch gekennzeichnet, daß das gesinterte und verstreckte Bändchen fibrilliert wird.

## Claims

1. A monoaxially stretched molded article of polytetrafluoroethylene comprising talc and/or mica and/or precipitated chalk as a filler and having a strength in the direction of stretching of at least 10 cN/tex, the filler being provided in the molded article by a maximum of 40 % by mass.

2. A molded article according to claim 1, characterized in that talc and/or mica is (are) provided as said filler by between 20 and 30 % by mass.

3. A molded article according to claim 1, characterized in that precipitated chalk is provided as said filler by at least 5 % by mass.

4. A molded article according to any one of claims 1 to 3, characterized in that it has an elongation of 30 % at most.

5. A molded article according to claim 1, characterized in that precipitated chalk is exclusively provided as said filler and that it is configured as a dental floss.

6. A molded article according to claim 5, characterized in that the precipitated chalk is provided by between 0.1 and 15 % by mass.

7. A method of producing a molded article according to any one of claims 1 to 6, characterized by the combination of the measures that
a) polytetrafluoroethylene in powder form is mixed with talc and/or mica and/or precipitated chalk as a filler and with a hydrocarbon,
b) the mixture obtained is molded to a premolded article and freed from hydrocarbon,
c) the premolded article freed from hydrocarbon is sintered and subsequently is monoaxially stretched in the sintered state, wherein the filler is used in such an amount that 40 % by mass will not be exceeded in the molded article, and wherein monoaxial stretching is carried out in a manner that the strength of the molded article in the direction of stretching is at least 10 cN/tex.

8. A method according to claim 7, characterized in that the premolded article is heated to a temperature of at least 327°C, preferably between 380 and 400°C, for sintering.

9. A method according to any one of claim 7 or 8, characterized in that the sintered premolded article is stretched at a ratio of between 1:5 and 1:20, preferably between 1:5 and 1:15.

10. A method according to any one of claims 7 to 9, characterized in that the premolded article is a film or foil, which is cut to bandelets after sintering and stretching.

11. A method according to claim 10, characterized in that the sintered and stretched bandelet is fibrillated.

## Revendications

1. Corps façonné monoaxialement étiré à base de polytétrafluoroéthylène avec du talc et/ou du mica et/ou de la craie lavée, comme charge, et une résistance dans la direction d'étirage d'au moins 10 cN/tex, la charge étant prévue dans le corps façonné à au maximum 40% en masse.

2. Corps façonné suivant la revendication 1, caractérisé en ce qu'on prévoit, comme charge, entre 20 et 30% en masse de talc et/ou de mica.

3. Corps façonné suivant la revendication 1, caractérisé en ce qu'on prévoit, comme charge, de la craie lavée en au moins 5% en masse.

4. Corps façonné suivant l'une des revendications 1 à 3, caractérisé en ce qu'il présente un allongement d'au maximum 30%.

5. Corps façonné suivant la revendication 1, caractérisé en ce que, comme charge, on prévoit exclusivement de la craie lavée et en ce qu'il est réalisé sous la forme d'une soie dentaire.

6. Corps façonné suivant la revendication 5, caractérisé en ce que la craie lavée est prévue entre 0,1 et 15% en masse.

7. Procédé de fabrication d'un corps façonné suivant l'une des revendications 1 à 6, caractérisé par la combinaison des mesures selon lesquelles
a) on mélange du polytétrafluoroéthylène pulvérulent et du talc et/ou du mica et/ou de la craie lavée, comme charge, et un hydrocarbure,
b) on façonne le mélange obtenu en une ébauche de corps façonné et on le libère de l'hydrocarbure,
c) on fritte l'ébauche de corps façonné libérée de l'hydrocarbure et on l'étire ensuite monoaxialement à l'état fritté, la charge étant mise en oeuvre en une quantité telle que 40% en masse dans le corps façonné ne sont pas dépassés, l'étirage monoaxial étant effectué de façon que la résistance du corps façonné dans la direction d'étirage soit au moins de 10 cN/tex.

8. Procédé suivant la revendication 7, caractérisé en ce que l'ébauche de corps façonné est, pour le frittage, chauffée à une température d'au moins 327°C, de préférence entre 380 et 400°C.

9. Procédé suivant l'une des revendications 7 et 8, caractérisé en ce que l'ébauche de corps façonné frittée est étirée dans un rapport compris entre 1/5 et 1/20, de préférence entre 1/5 et 1/15.

10. Procédé suivant l'une des revendications 7 à 9, caractérisé en ce que l'ébauche de corps façonné est une feuille qui, après frittage et étirage, est découpée en bandelettes.

11. Procédé suivant la revendication 10, caractérisé en ce que la bandelette frittée et étirée est fibrillée.
